# EUROPEAN PATENT APPLICATION

(11) **EP 4 481 932 A1**
(43) Date of publication of application: **25.12.2024**
(21) Application number: 23756530.4
(22) Date of filing: 19.01.2023
(51) Int. Cl.: H01M 50/519, H01M 50/211, H01M 10/48

(54) **BATTERY MODULE AND DEVICE INCLUDING SAME**

(30) Priority: 15.02.2022 KR 20220019802; 12.01.2023 KR 20230004886
(71) Applicant: LG Energy Solution, Ltd., Seoul 07335 (KR)
(72) Inventor: AN, Hyuk, Daejeon 34122 (KR); LEE, Hee Su, Daejeon 34122 (KR); KIM, Dae Gil, Daejeon 34122 (KR)
(74) Representative: Goddar, Heinz J.
(86) International application number: PCT/KR2023/000921
(87) International publication number: WO 2023/158117

(57) **Abstract**

The present invention relates to a battery module and a device including the same. The battery module according to an embodiment of the present invention includes: a battery cell stack in which a plurality of battery cells are stacked in a first direction; a first bus bar frame and a second bus bar frame, which face each other in a second direction different from the first direction with the battery cell stack therebetween; a first circuit board disposed to face at least a portion of the outermost battery cell disposed at the outermost side of the plurality of battery cells in the first direction; and at least one first temperature sensor disposed on the first circuit board.

## Description

### BACKGROUND ART

### CROSS-REFERENCE TO RELATED APPLICATION

The present application claims the benefit of the priority of Korean Patent Application Nos. 10-2022-0019802, filed on February 15, 2022, and 10-2023-0004886, filed on January 12, 2023, which are hereby incorporated by reference in their entirety.

### TECHNICAL FIELD

The present invention relates to a battery module and a device including the same, and more particularly, to a battery module capable of sensing a temperature thereof and a device including the same.

### BACKGROUND ART

Recently, as demands for portable electronic products such as laptops, video cameras, and mobile phones have rapidly increased, and development of electric vehicles, energy storage batteries, robots, satellites, etc. is regularized, a lot of researches have been conducted on a secondary battery used as a driving power source.

As needs for structures of large-capacity secondary batteries in addition to the utilization as energy storage sources increase, demands for battery packs having a multi-module structure in which battery modules, in which a plurality of secondary batteries are connected to each other, are assembled are increasing.

A battery module may be affected by various operating environments of an electronic product to which the electronic module is attached. For example, the battery module may have a large difference in charge amount and output depending on temperature conditions. Therefore, various methods for effectively controlling the battery module according to the temperature of the operating environment in which the battery module is placed are required.

### DISCLOSURE OF THE INVENTION

### TECHNICAL PROBLEM

An embodiment of the present invention is to provide a battery module capable of sensing a temperature thereof and a device including the same.

The object of the present invention is not limited to the aforesaid, but other objects not described herein will be clearly understood by those skilled in the art from descriptions below.

### TECHNICAL SOLUTION

A battery module according to an embodiment of the present invention includes: a battery cell stack in which a plurality of battery cells are stacked in a first direction; a first bus bar frame and a second bus bar frame, which face each other in a second direction different from the first direction with the battery cell stack therebetween; a first circuit board disposed to face at least a portion of the outermost battery cell disposed at the outermost side among the plurality of battery cells in the first direction; and at least one first temperature sensor disposed on the first circuit board.

According to an embodiment, the battery module may further include a fixing member coupled to at least one of the first bus bar frame and the second bus bar frame, wherein the fixing member may be disposed between the first circuit board, on which the first temperature sensor is mounted, and the outermost battery cell.

According to an embodiment, the fixing member may be made of a material having rigidity greater than that of the first circuit board.

According to an embodiment, at least one of the fixing member and the first circuit board may extend in a bar shape in the second direction that is a longitudinal direction of the outermost battery cell.

According to an embodiment, the fixing member may be attached to at least one of the first bus bar frame or the second bus bar frame through laser welding.

According to an embodiment, the battery cell stack may include a top surface and a bottom surface on which the plurality of battery cells are stacked, wherein one of the top surface and the bottom surface may have a temperature less than that of the other of the top surface and the bottom surface.

According to an embodiment, the battery module may further include: a second circuit board disposed on at least a portion of the top surface of the battery cell stack; and a second temperature sensor disposed on the second circuit board, wherein the top surface may have a temperature greater than that of the bottom surface.

According to an embodiment, the first temperature sensor may be disposed adjacent to the bottom surface having a temperature less than that of the top surface.

According to an embodiment, the battery module may further include: a frame configured to cover a first side surface and a second side surface of the battery cell stack; and an upper cover coupled to the frame to cover the top surface of the battery cell stack, wherein the first circuit board may face the frame, and the second circuit board may face the upper cover.

According to an embodiment, a portion of the first circuit board may be bent so that one end of the first circuit board extends in a third direction different from each of the first direction and the second direction, and the battery module may include at least one third temperature sensor disposed on the first circuit board extending in the third direction.

According to an embodiment, the battery module may further include a fixing member coupled to at least one of the first bus bar frame and the second bus bar frame, wherein the fixing member may be disposed between the first circuit board and the outermost battery cell, and a portion of the fixing member may be bent so that one end of the fixing member extends in a third direction different from each of the first direction and the second direction.

A device according to an embodiment of the present invention may the above-described battery module.

### ADVANTAGEOUS EFFECTS

According to the embodiment of the present invention, the cold spot of the battery cell stack may be sensed using the first temperature sensor, and the hot spot of the battery cell stack may be sensed using the second temperature sensor.

In addition, the various effects that are directly or indirectly identified through the present disclosure may be provided.

### BRIEF DESCRIPTION OF THE DRAWINGS

FIG. 1 is a perspective view illustrating a battery module according to an embodiment of the present invention.
FIG. 2 is an exploded perspective view illustrating the battery module of FIG. 1.
FIG. 3 is a cross-sectional view taken alone line "A-A" in the battery module illustrated in FIG. 1 according to an embodiment of the present invention.
FIG. 4 is a detailed view illustrating a first temperature sensor and a second temperature sensor, which are provided in the battery module, according to an embodiment of the present invention.
FIGS. 5a and 5b are views for explaining a method for manufacturing a battery module according to an embodiment of the present invention.
FIG. 6 is an exploded perspective view for explaining a first embodiment of a fixing member provided in the battery module according to an embodiment of the present invention.
FIG. 7 is an exploded perspective view for explaining a second embodiment of a fixing member provided in the battery module according to an embodiment of the present invention.
FIG. 8 is an exploded perspective view for explaining a third embodiment of a fixing member provided in the battery module according to an embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

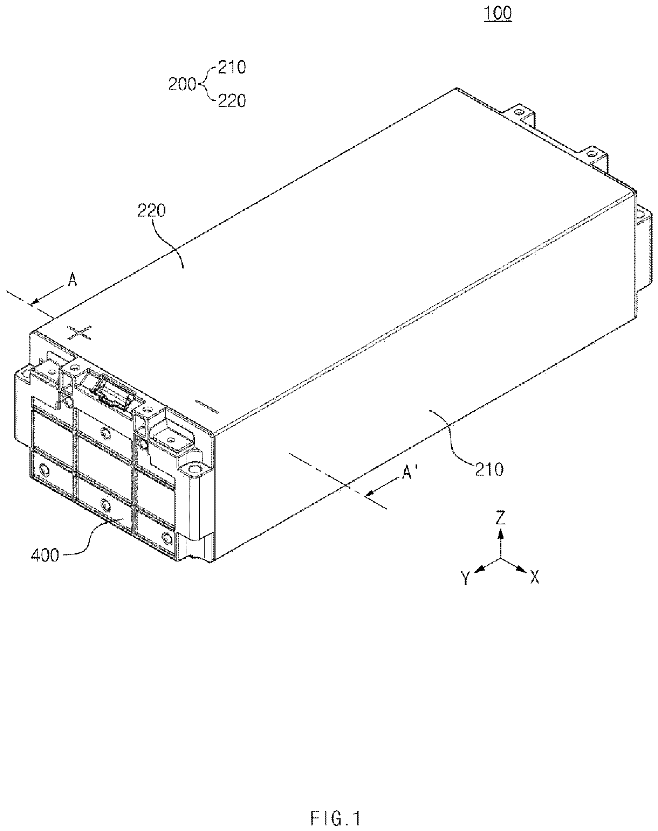

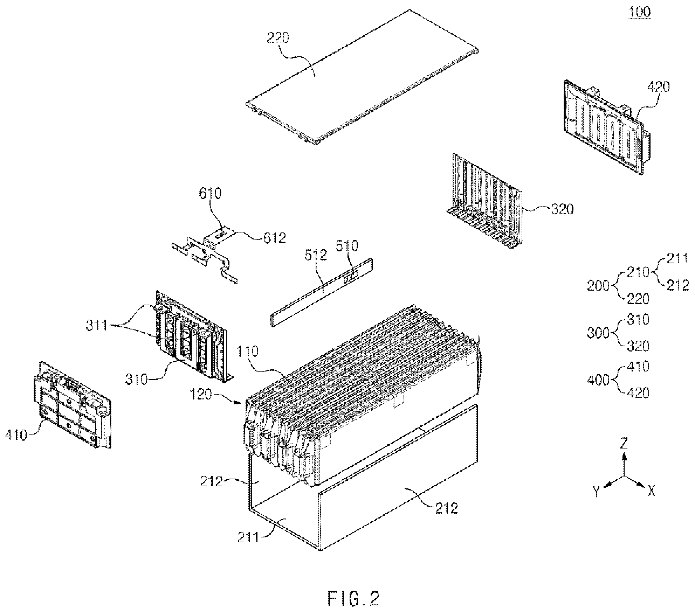

FIG. 1 is a perspective view illustrating a battery module 100 according to an embodiment of the present invention, and FIG. 2 is an exploded perspective view illustrating the battery module 100 of FIG. 1. Hereinafter, for convenience of description, based on FIGS. 1 and 2, a first direction (e.g., X-axis direction) will be described as a width direction of the battery module 100, a second direction (e.g., Y-axis direction) will be described in a longitudinal direction of the battery module 100, and a third direction (e.g., Z-axis direction) will be described as a height direction of the battery module 100.

Referring to FIGS. 1 and 2, the battery module 100 according to an embodiment of the present invention may include a battery cell stack 120, a module frame 200, a bus bar frame 300 and an end plate 400.

The battery cell stack 120 may be provided by stacking a plurality of battery cells 110 to be electrically connected to each other. The plurality of battery cells 110 may be stacked in a line along the first direction (+X-axis direction).

The battery cell 110 may be a secondary battery. For example, the battery cell 110 may be provided as a pouch-type secondary battery. Each of the battery cells 110 may include an electrode assembly, a battery case, and an electrode lead protruding from the electrode assembly.

The module frame 200 may accommodate the battery cell stack 120. The module frame 200 may include an upper cover 220 and a U-shaped frame 210.

The U-shaped frame 210 may include a bottom area 211 and two side areas 212 extending from both ends of the bottom area 211 in the third direction (e.g., +Z-axis direction). The bottom area 211 may cover a bottom surface (e.g., a surface facing in a direction opposite to the third direction (e.g., -Z-axis direction)) of the battery cell stack 120. The side areas 212 may cover a first side surface (e.g., a surface facing the first direction (+X-axis direction)) of the battery cell stack 120 and a second surface (e.g., a surface facing a direction opposite to the first direction (-X-axis direction)) of the battery cell stack 120.

The upper cover 220 may be provided as a single plate-like structure surrounding the top surface (e.g., a surface facing the third direction (+Z axis)) of the battery cell stack 120. The upper cover 220 and the U-shaped frame 210 may provide a structure that is coupled by welding to cover the battery cell stack 120 in a vertical direction and in a left and right direction in a state of being in contact with edge portions corresponding to each other. The battery cell stack 120 may be physically protected through the upper cover 220 and the U-shaped frame 210. For this, the upper cover 220 and the U-shaped frame 210 may include a metal material having predetermined strength.

In an embodiment, a structure in which the upper cover 220 and the U-shaped frame 210 provided in the module frame 200 are provided as separate structures to be coupled to each other has been described as an example, but this is not limited thereto. For example, the module frame 200 may be provided as a mono frame in the form of a metal plate in which the upper cover 220 and the U-shaped frame 210 are integrated with each other. The module frame 200 may be provided as an integral structure through an extrusion manufacturing process.

The bus bar frame 300 may include a first bus bar frame 310 and a second bus bar frame 320. The first bus bar frame 310 may be disposed on a third side surface (e.g., a surface facing the second direction (+Y axis direction)) of the battery cell stack 120. The first bus bar frame 310 may be connected to electrode leads disposed on the third side surface of the battery cell stack 120. The first bus bar frame 310 may include a terminal bus bar 311. The terminal bus bar 311 may protrude outward through an opening defined in the end plate 400 and electrically connect other devices of the battery pack to the battery module. A temperature of the area around the terminal bus bar 311, which is an electrical channel, may be higher than that of each of other areas.

The second bus bar frame 320 may be disposed on a fourth side surface (e.g., a surface facing a direction opposite to the second direction (-Y axis direction)) of the battery cell stack 120. The second bus bar frame 320 may be connected to electrode leads disposed on the fourth side of the battery cell stack 120. Each of the first bus bar frame 310 and the second bus bar frame 320 may be coupled to the upper cover 220. Upper ends of the first bus bar frame 310 and the second bus bar frame 320 may be connected to each other through the upper cover 220.

The end plate 400 may be disposed in the opened area of the module frame 200 to cover the bus bar frame 300. The end plate 400 may protect the bus bar frame 300, the battery cell stack 120, and various electrical components connected thereto from an external impact. In addition, the end plate 400 may guide electrical connection between the battery cell stack 120 and an external power source.

The end plate 400 may include a first end plate 410 and a second end plate 420. The first end plate 410 may cover the first bus bar frame 310. An insulating member (not shown) may be inserted between the first end plate 410 and the first bus bar frame 310. The insulating member may block electrical connection between the first bus bar frame 310 and external electric components. The second end plate 420 may cover the second bus bar frame 310. An insulating member (not shown) may be inserted between the second end plate 420 and the second bus bar frame 320. The insulating member may block electrical connection between the second bus bar frame 320 and the external electric components.

According to an embodiment, the battery module 100 may include a plurality of temperature sensors 510 and 610. The plurality of temperature sensors may include at least one first temperature sensor 510 and at least one second temperature sensor 610. The first temperature sensor 510 may be mounted on a first circuit board 512, and the second temperature sensor 610 may be mounted on a second circuit board 612. At least one of the first temperature sensor 510 and the second temperature sensor 610 may be provided as, for example, a thermistor element of which a resistance value varies according to the temperature. Temperature information measured by each of the first temperature sensor 510 and the second temperature sensor 610 may be transferred to another device disposed outside the battery module 100. For example, when the temperature is measured by the temperature sensors 510 and 610, the measured temperature information may be transferred to a battery management system (BMS) disposed outside the battery module 100 and then may be used for controlling the battery module 100.

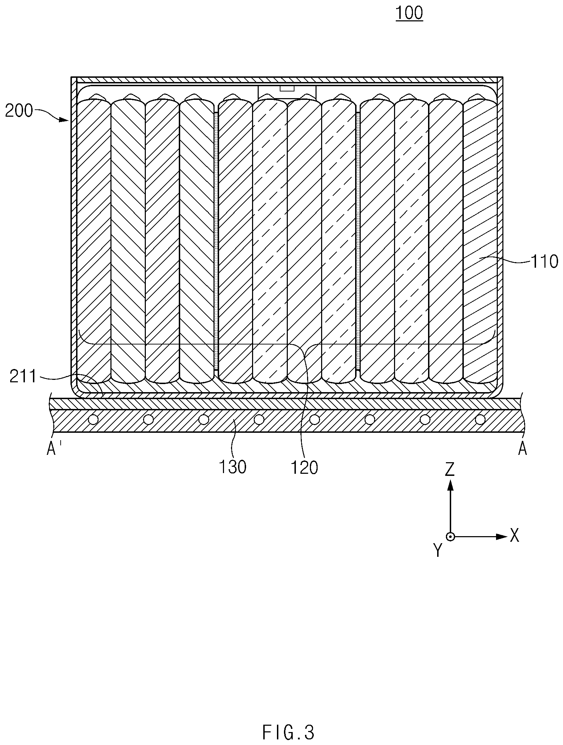

Since the battery cells 110 inside the battery module 100 generate electric energy to emit heat, the battery module 100 may include a cooling device for cooling the emitted heat. The cooling device provided in the battery module 100 will be described with reference to FIG. 3.

FIG. 3 is a cross-sectional view taken alone line "A-A" in the battery module illustrated in FIG. 1 according to an embodiment of the present invention.

Referring to FIG. 3, since the battery module 100 according to an embodiment of the present invention includes the plurality of battery cells 110, a large amount of heat may be generated during charging and/or discharging. The battery module 100 may include a cooling member 130 for transferring heat generated from the battery cells 110 to the outside of the battery module 100. For example, the cooling member 130 may be disposed under the module frame 200. As another example, the cooling member 130 may be disposed between the battery cell stack 120 and the bottom area 211 of the module frame 200. As another example, the cooling member 130 may be disposed under the module frame 200 and disposed between the battery cell stack 110 and the bottom area 211 of the module frame 200. Thus, a cold spot having a relatively lower temperature than each of other parts may be defined at the battery cell stack due to the disposition of the cooling member 130.

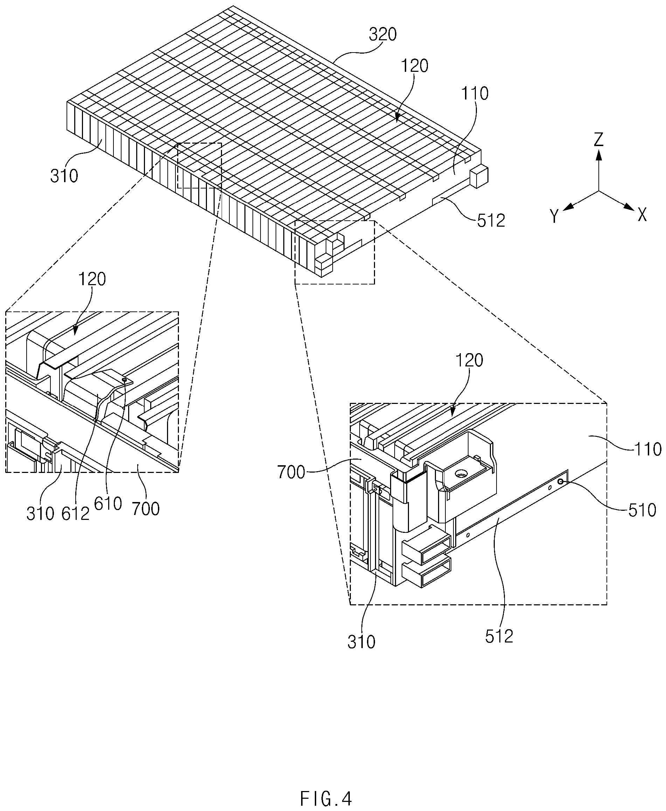

FIG. 4 is a detailed view illustrating the first temperature sensor and the second temperature sensor, which are provided in the battery module, according to an embodiment of the present invention.

Referring to FIG. 4, the battery module according to an embodiment of the present invention may include the first temperature sensor 510 and the second temperature sensor 610.

The first temperature sensor 510 may be disposed at the cold spot, which is a portion of the battery cell stack 120, which has a relatively low temperature, to sense the temperature of the battery cell stack 120. The first temperature sensor 510 may be mounted on the first circuit board 512. For example, the first temperature sensor 510 may be mounted on the first circuit board 512 disposed to face the outermost battery cell 110 disposed at the outermost side of the plurality of battery cells 110 aligned in the first direction (e.g., X direction). The first temperature sensor 510 may be disposed adjacent to the cooling member (e.g., the cooling member 130 in FIG. 3). The first circuit board 512 on which the first temperature sensor 510 is mounted may be disposed below a side surface of the outermost battery cell 110 so as to be adjacent to the bottom area (e.g., the bottom area 211 in FIG. 2) of the module frame. The first circuit board 512 may be electrically connected to a main circuit board 700 disposed on at least one of the first bus bar frame 310 or the second bus bar frame 320. The first circuit board 512 may be a flexible printed circuit board (FPCB). The first circuit board 512 may be provided in a bar shape along the second direction, which is a longitudinal direction of the outermost battery cell 110. For example, one first circuit board 512 may be provided. One first circuit board 512 may be disposed between the first bus bar frame 310 and the second bus bar frame 320 to physically connect the first bus bar frame 310 to the second bus bar frame 320. As another example, a plurality of first circuit boards 512 may be provided. At least one of the plurality of first circuit boards 512 may extend from the first bus bar frame 310 toward the second bus bar frame 320 and then be provided in a bar shape, and at least one of the rest of the plurality of first circuit boards 512 may extend from the second bus bar frame 320 toward the first bus bar frame 310 and then be provided in a bar shape.

The second temperature sensor 610 may be disposed at a hot spot, which is a portion of the battery cell stack 120, which has a relatively high temperature, to sense the temperature of the battery cell stack 120. The hot spot may be a portion at which electrode tabs of the respective battery cells are connected to each other. The second temperature sensor 610 may be mounted on the second circuit board 612. For example, the second temperature sensor 610 may be mounted on the second circuit board 612, which extends in the second direction (e.g., Y direction) perpendicular to the first direction (e.g., X direction), of a plurality of battery cells. The second circuit board 612 may be disposed on at least a portion of a top surface of the battery cell stack 120. A temperature of the top surface of the battery cell stack 120 may be higher than a temperature of the bottom surface (depending on the absence of the cooling device). The first circuit board 712 may be electrically connected to a main circuit board 700 disposed on at least one of the first bus bar frame 310 or the second bus bar frame 320. The second circuit board 612 may be a flexible printed circuit board (FPCB).

As described above, the battery module 100 according to an embodiment of the present invention may check all temperatures of the cold spot and the hot spot of the battery cell stack 120. Thus, performance of the battery module 100 may be confirmed by simultaneously checking stability and an output of the battery module.

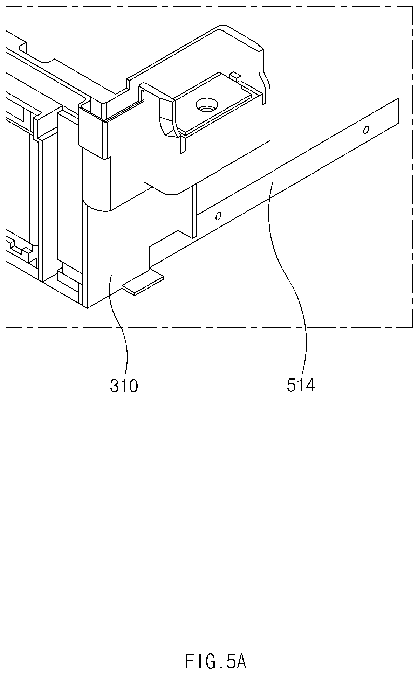

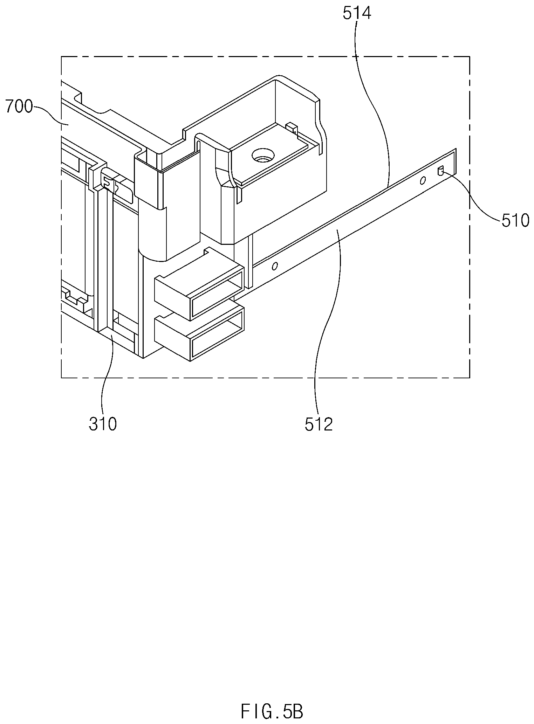

FIGS. 5a and 5b are views for explaining a method for manufacturing a battery module according to an embodiment of the present invention.

As illustrated in FIG. 5a, a fixing member 514 may be fixed to at least one of the first bus bar frame 310 or the second bus bar frame. The fixing member 514 may be attached to at least one of the first bus bar frame 310 or the second bus bar frame (e.g., the second bus bar frame 320 in FIG. 4) through laser welding. The fixing member 514 may be formed in a bar shape along the second direction, which is a longitudinal direction of the outermost battery cell (e.g., the outermost battery cell 110 in FIG. 4).

Then, as illustrated in FIG. 5B, a first circuit board 512 on which a first temperature sensor 510 is mounted may be attached to the fixing member 514. The fixing member 514 may be disposed between the first circuit board 512 and a battery cell (e.g., a battery cell 110 in FIG. 4) disposed at the outermost side of the plurality of battery cells. For example, the fixing member 514 may be disposed to face a mounting surface of the first circuit board 512 on which the first temperature sensor 510 is mounted. As another example, the fixing member 514 may be disposed to face an opposite surface of the first circuit board 512, which faces an opposite direction to the mounting surface of the first circuit board 512.

According to an embodiment, the fixing member 514 may be made of a thin plastic material such as polycarbonate (PC) so as to flow in a left and right direction (e.g., a y-axis direction). The fixing member 514 may be made of a material having rigidity greater than that of at least one of the first circuit board 512 or the main circuit board 700.

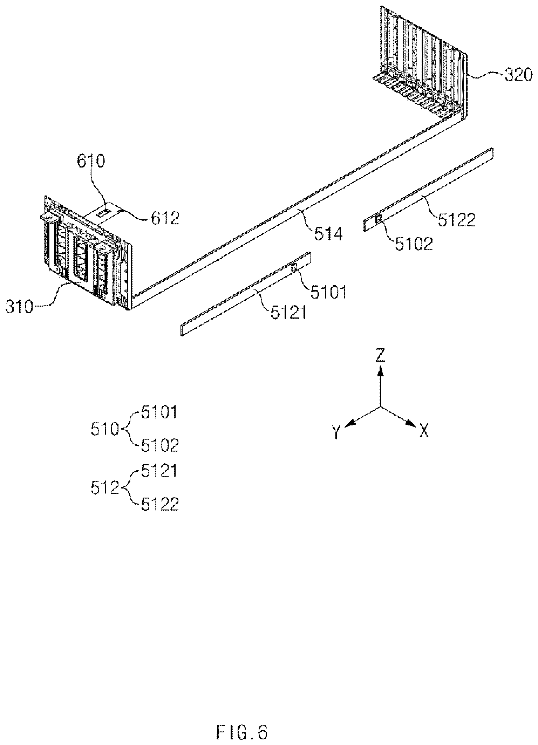

FIG. 6 is a view illustrating a first embodiment of the fixing member provided in the battery module according to an embodiment of the present invention.

Referring to FIG. 6, the fixing member 514 may be attached to the first bus bar frame 310 and the second bus bar frame 320. The fixing member 514 may be attached to one surface of each of the first bus bar frame 310 and the second bus bar frame 320. The fixing member 514 may extend from one surface of one of the first bus bar frame 310 and the second bus bar frame 320 to the other of the first bus bar frame 310 and the second bus bar frame 320. One surface of each of the first bus bar frame 310 and the second bus bar frame 320 may be a side surface facing the first direction (e.g., +X direction) that is the stacking direction of the plurality of battery cells (e.g., the battery cells 110 in FIG. 2).

The first circuit board 512 may include a first sub-circuit board 5121 and a second sub-circuit board 5122. The first sub-circuit board 5121 may be disposed adjacent to the first bus bar frame 310. A first sub-temperature sensor 5101 provided in the first temperature sensor 510 may be disposed on the first sub-circuit board 5121. The second sub-circuit board 5122 may be disposed adjacent to the second bus bar frame 320. A second sub-temperature sensor 5102 provided in the first temperature sensor 510 may be disposed on the second sub-circuit board 5122. The first sub-circuit board 5121 and the second sub-circuit board 5122 may be disposed on the fixing member 514 to face each other in a second direction (e.g., Y direction) perpendicular to the first direction.

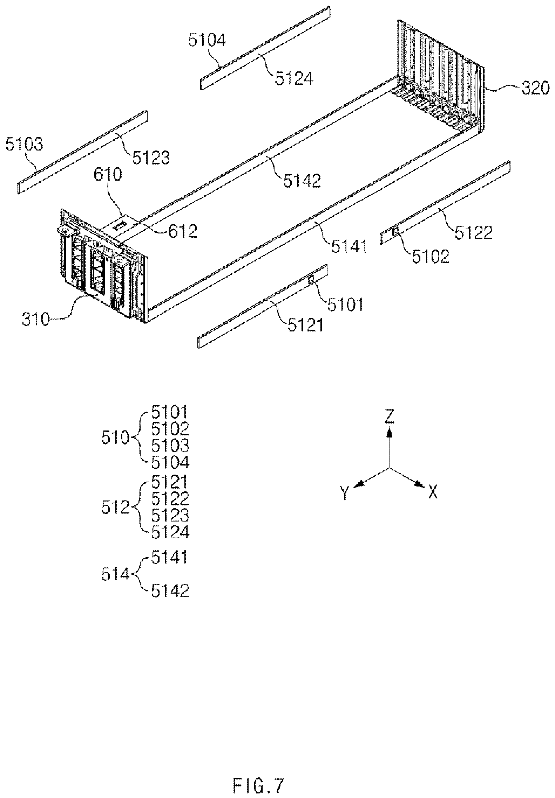

FIG. 7 is a view illustrating a second embodiment of the fixing member provided in the battery module according to an embodiment of the present invention.

Referring to FIG. 7, a fixing member 514 may include a first fixing member 5141 and a second fixing member 5142. The first fixing member 5141 and the second fixing member 5142 may be disposed to face each other with a battery cell stack (e.g., the battery cell stack 120 in FIG. 2) therebetween.

The first fixing member 5141 may extend from one surface of one of a first bus bar frame 310 and a second bus bar frame 320 to the other of the first bus bar frame 310 and the second bus bar frame 320. One surface of each of the first bus bar frame 310 and the second bus bar frame 320 may be a side surface facing the first direction that is the stacking direction of the battery cells 110.

The fixing member 5142 may extend from the other surface of one of the first bus bar frame 310 and the second bus bar frame 320 to the other surface of the other of the first bus bar frame 310 and the second bus bar frame 320. The other surface of each of the first bus bar frame 310 and the second bus bar frame 320 may be a side surface facing an opposite direction (e.g., -X direction) of the first direction (e.g., +X direction) that is the stacking direction of the plurality of battery cells.

A first circuit board 512 may include a first sub-circuit board 5121, a second sub-circuit board 5122, a third sub-circuit board 5123, and a fourth sub-circuit board 5124.

The first sub-circuit board 5121 and the second sub-circuit board 5122 may be provided separately from each other or integrally provided with each other and then may be disposed on the first fixing member 5141. The first sub-circuit board 5121 may be disposed adjacent to the first bus bar frame 310. The second sub-circuit board 5122 may be disposed adjacent to the second bus bar frame 320.

The third sub-circuit board 5123 and the fourth sub-circuit board 5124 may be provided separately from each other or integrally provided with each other and then may be disposed on the second fixing member 5142. The third sub-circuit board 5123 may be disposed adjacent to the first bus bar frame 310. The third sub-circuit board 5123 may be disposed to face the first sub-circuit board 5121 with the battery cell stack therebetween. The fourth sub-circuit board 5124 may be disposed adjacent to the second bus bar frame 320. The fourth sub-circuit board 5124 may be disposed to face the second sub-circuit board 5122 with the battery cell stack therebetween.

A first temperature sensor 510 may include a first sub-temperature sensor 5101, a second sub-temperature sensor 5102, a third sub-temperature sensor 5103, and a fourth sub-temperature sensor 5104.

The first sub-temperature sensor 5101 may be disposed on the first sub-circuit board 5121. The first sub-temperature sensor 5101 may sense a temperature of the cold spot of the outermost battery cell adjacent to the first sub-circuit board 5121 among the plurality of battery cells. The second sub-temperature sensor 5102 may be disposed on the second sub-circuit board 5122. The second sub-temperature sensor 5102 may sense a temperature of the cold spot of the outermost battery cell adjacent to the second sub-circuit board 5122 among the plurality of battery cells. The third sub-temperature sensor 5103 may be disposed on the third sub-circuit board 5123. The third sub-temperature sensor 5103 may sense a temperature of the cold spot of the outermost battery cell adjacent to the third sub-circuit board 5123 among the plurality of battery cells. The fourth sub-temperature sensor 5104 may be disposed on the fourth sub-circuit board 5124. The fourth sub-temperature sensor 5104 may sense a temperature of the cold spot of the outermost battery cell adjacent to the fourth sub-circuit board 5124 among the plurality of battery cells.

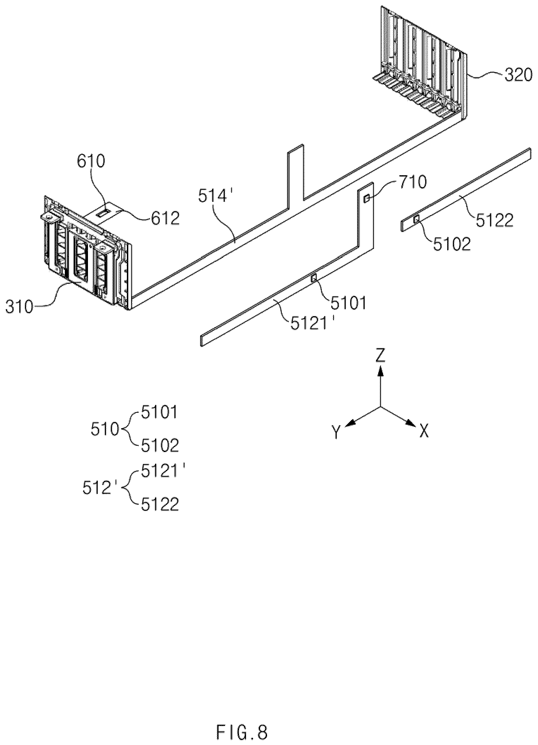

FIG. 8 is a view illustrating a third embodiment of the fixing member provided in the battery module according to an embodiment of the present invention.

Referring to FIG. 8, a fixing member 514' may be disposed between a first circuit board 512' and a battery cell (e.g., the battery cell 110 in FIG. 4) disposed at the outermost side among a plurality of battery cells. In addition, the fixing member 514' may be coupled to at least one of a first bus bar frame 310 or a second bus bar frame 320. Specifically, the fixing member 514' may be attached to the first bus bar frame 310 and the second bus bar frame 320.

A portion of the fixing member 514' according to the third embodiment may be bent so that one end thereof extends in the third direction (e.g., Z-axis direction) different from the first and second directions. Specifically, the fixing member 514' may extend from a first temperature sensor 510 toward a top surface of a battery cell stack 120 in the third direction (e.g., +Z-axis direction). A length of the fixing member 514' extending in the third direction may be the same as a height of the battery cell stack 120.

The first circuit board 512' may include a first sub-circuit board 5121' and a second sub-circuit board 5122. Here, a portion of the first sub-circuit board 5121' may be bent so that one end extends in the third direction (e.g., Z-axis direction) different from the first and second directions. Specifically, the first sub-circuit board 5121' may extend in the third direction (e.g., +Z-axis direction) from the first temperature sensor 510 toward the top surface of the battery cell stack 120.

The first sub-circuit board 5121' may be disposed adjacent to the first bus bar frame 310. Also, the first sub-temperature sensor 5101 and the third temperature sensor 710 provided in the first temperature sensor 510 may be disposed on the first sub-circuit board 5121'. Specifically, a third temperature sensor 710 may be disposed on the first sub-circuit board 5121' extending in the third direction. Here, the third temperature sensor 710 may be provided as a thermistor element of which a resistance value varies according to the temperature.

The third temperature sensor 710 may be disposed at a hot spot, which is a portion of the battery cell stack 120, which has a relatively high temperature, to sense a temperature of the battery cell stack 120. The hot spot may be a portion adjacent to a top surface of each of the battery cells rather than a bottom surface.

As described above, the third temperature sensor 710 may be mounted on the first sub-circuit board 5121'. Specifically, the third temperature sensor 710 may be mounted at a position adjacent to the top surface of the battery cell stack 120 rather than the bottom surface of the battery cell stack 120 on the first sub-circuit board5121' extending in the third direction (e.g., Z direction). This is because the hot spot is a portion adjacent to the top surface of each battery cell rather than the bottom surface.

When the battery module 100 includes the third temperature sensor 710, all temperatures of various hot spots of the battery cell stack 120 may be checked. Thus, performance of the battery module 100 may be confirmed in more detail.

A portion of the second sub-circuit board 5122 instead of the first sub-circuit board 5121' may be bent so that one end thereof extends in the third direction (e.g., Z-axis direction). Here, the third temperature sensor 710 may be disposed on the second sub-circuit board 5122 extending in the third direction.

The battery module 110 described above may be applied to various devices. It may be applied to transportation means such as electric bicycles, electric vehicles, hybrids, etc., but is not limited thereto and may be applied to various devices capable of using the battery module 110. While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Battery module
120: Battery cell stack
510: First temperature sensor
512, 512': First circuit board
514, 514': Fixing member
610: Second temperature sensor
612: Second circuit board
710: Third temperature sensor

## Claims

1. A battery module comprising:
a battery cell stack in which a plurality of battery cells are stacked in a first direction;
a first bus bar frame and a second bus bar frame, which face each other in a second direction different from the first direction with the battery cell stack therebetween;
a first circuit board disposed to face at least a portion of the outermost battery cell disposed at the outermost side of the plurality of battery cells in the first direction; and
at least one first temperature sensor disposed on the first circuit board.

2. The battery module of claim 1, further comprising a fixing member coupled to at least one of the first bus bar frame and the second bus bar frame,
wherein the fixing member is disposed between the first circuit board, on which the first temperature sensor is mounted, and the outermost battery cell.

3. The battery module of claim 2, wherein the fixing member is made of a material having rigidity greater than that of the first circuit board.

4. The battery module of claim 2, wherein at least one of the fixing member and the first circuit board extends in a bar shape in the second direction that is a longitudinal direction of the outermost battery cell.

5. The battery module of claim 2, wherein the fixing member is attached to at least one of the first bus bar frame or the second bus bar frame through laser welding.

6. The battery module of claim 1, wherein the battery cell stack comprises a top surface and a bottom surface on which the plurality of battery cells are stacked,
wherein one of the top surface and the bottom surface has a temperature less than the other of the top surface and the bottom surface.

7. The battery module of claim 6, further comprising:
a second circuit board disposed on at least a portion of the top surface of the battery cell stack; and
a second temperature sensor disposed on the second circuit board,
wherein the top surface has a temperature greater than that of the bottom surface.

8. The battery module of claim 6, wherein the first temperature sensor is disposed adjacent to the bottom surface having a temperature less than that of the top surface.

9. The battery module of claim 7, further comprising:
a frame configured to cover a first side surface and a second side surface of the battery cell stack; and
an upper cover coupled to the frame to cover the top surface of the battery cell stack,
wherein the first circuit board faces the frame, and
wherein the second circuit board faces the upper cover.

10. The battery module of claim 1, wherein a portion of the first circuit board is bent so that one end of the first circuit board extends in a third direction different from each of the first direction and the second direction, and
wherein the battery module further comprises at least one third temperature sensor disposed on the first circuit board extending in the third direction.

11. The battery module of claim 10, further comprising a fixing member coupled to at least one of the first bus bar frame and the second bus bar frame,
wherein the fixing member is disposed between the first circuit board and the outermost battery cell, and a portion of the fixing member is bent so that one end of the fixing member extends in a third direction different from each of the first direction and the second direction.

12. A device comprising the battery module of any one of claims 1 to 11.
